# EUROPEAN PATENT APPLICATION

(11) **EP 4 741 537 A1**
(43) Date of publication of application: **13.05.2026**
(21) Application number: 23944172.8
(22) Date of filing: 25.10.2023
(51) Int. Cl.: C25C 7/06, C25C 7/08

(54) **ELECTROLYTIC CELL LOADING/UNLOADING PLATFORM AND ELECTROLYTIC LOADING/UNLOADING INTEGRATED SYSTEM**

(30) Priority: 05.07.2023 CN 202310815830; 05.07.2023 CN 202321744318 U
(71) Applicant: Jiangxi Nerin Equipment Co., Ltd., Nanchang, Jiangxi 330013 (CN); China Nerin Engineering Co., Ltd., Nanchang, Jiangxi 330031 (CN); Ningbo Jintian Copper (Group) Co., Ltd., Ningbo, Zhejiang 315043 (CN)
(72) Inventor: DENG, Aimin, Nanchang, Jiangxi 330013 (CN); DENG, Zhaochang, Nanchang, Jiangxi 330013 (CN); SHAO, Xiaoguang, Nanchang, Jiangxi 330013 (CN); WENG, Gaofeng, Ningbo, Zhejiang 315043 (CN); DENG, Wentao, Nanchang, Jiangxi 330031 (CN); YU, Zhiyan, Nanchang, Jiangxi 330013 (CN); WEI, Dongdong, Nanchang, Jiangxi 330013 (CN); SHEN, Zhonghui, Ningbo, Zhejiang 315043 (CN); FANG, Sihua, Ningbo, Zhejiang 315043 (CN); FU, Weian, Nanchang, Jiangxi 330031 (CN); WANG, Shiyu, Nanchang, Jiangxi 330013 (CN); GAO, Shijie, Nanchang, Jiangxi 330013 (CN)
(74) Representative: Studio Torta S.p.A.
(86) International application number: PCT/CN2023/126573
(87) International publication number: WO 2025/007450

(57) **Abstract**

The present disclosure relates to the technical field of metal smelting, and more specifically, to an electrolytic tank loading and unloading platform and an electrolytic loading and unloading integrated system. The electrolytic tank loading and unloading platform includes a support frame, a bottom plate, a washing device, a stripping device, and a loading and unloading robot. The bottom plate is disposed on the support frame. The bottom plate has a loading and unloading opening penetrating the bottom plate. The loading and unloading opening includes a first loading and unloading opening and a second loading and unloading opening formed at two ends of the bottom plate in a length direction of the bottom plate. The washing device is disposed at a surface of the bottom plate facing away from the support frame and located between the first loading and unloading opening and the second loading and unloading opening. The stripping device is disposed at the surface of the bottom plate facing away from the support frame and located between the first loading and unloading opening and the second loading and unloading opening. The loading and unloading robot is disposed at the surface of the bottom plate facing away from the support frame and adapted to grasp an electrode plate through the first loading and unloading opening and the second loading and unloading opening. By adopting the electrolytic tank loading and unloading platform of the present disclosure, logistics costs are low and a tank operation efficiency is high.

## Description

### CROSS-REFERENCE TO RELATED APPLICATIONS

This application claims priorities to Chinese Patent Applications No. 202310815830.9 and No. 202321744318.1 that are filed on July 05, 2023, the entire contents of which are incorporated herein by reference.

### FIELD

The present disclosure relates to the technical field of metal smelting, and more specifically, to an electrolytic tank loading and unloading platform and an electrolytic loading and unloading integrated system.

### BACKGROUND

During an electrolysis process of hydrometallurgical metal purification in non-ferrous metallurgy, an electrolyte is inputted into an electrolytic tank, an anode plate and a cathode plate are suspended in parallel inside the electrolytic tank, and a direct current is introduced to deposit metal on the cathode plate. After the electrolysis is completed, the cathode plate needs to be removed for cleaning or stripping of the deposited metal, and the anode plate needs to be removed for cleaning or removal of anode slime. If an anode is permanent, the treated anode is reinstalled in the tank. If the anode is non-permanent, the treated anode is packed and output, and a new anode in reserve is installed in the tank.

At present, in the process of loading and unloading electrode plates, the electrode plates in the electrolytic tank are mostly lifted out by a crane and lifting tools, to realize transportation of a plurality of electrode plates in a whole tank, a half tank, or one-third of the tank to a unit fixedly arranged in a factory building, thereby performing treatments of the electrode plates.

As a result, the loading and unloading of the electrode plates have high logistics costs and a low tank operation efficiency.

### SUMMARY

The present disclosure aims to at least solve one of the technical problems in the related art to some extent. To this end, an object of the present disclosure is to provide an electrolytic tank loading and unloading platform and an electrolytic loading and unloading integrated system. The electrolytic tank loading and unloading platform has characteristics of low logistics costs and a high tank operation efficiency.

To this end, an aspect of the present disclosure provides an electrolytic tank loading and unloading platform. According to embodiments of the present disclosure, the electrolytic tank loading and unloading platform includes a support frame, a bottom plate, a washing device, a stripping device, and a loading and unloading robot. The bottom plate is disposed on the support frame. The bottom plate has a loading and unloading opening penetrating the bottom plate. The loading and unloading opening includes a first loading and unloading opening and a second loading and unloading opening formed at two ends of the bottom plate in a length direction of the bottom plate. The washing device is disposed at a surface of the bottom plate facing away from the support frame and located between the first loading and unloading opening and the second loading and unloading opening. The stripping device is disposed at the surface of the bottom plate facing away from the support frame and located between the first loading and unloading opening and the second loading and unloading opening. The loading and unloading robot is disposed at the surface of the bottom plate facing away from the support frame and adapted to grasp an electrode plate through the first loading and unloading opening and the second loading and unloading opening.

With the electrolytic tank loading and unloading platform according to the embodiments of the present disclosure, loading and unloading operations of a single electrode plate (a cathode plate and/or an anode plate) may be performed with continuous power supply, to realize intelligent and unmanned electrolytic production, reducing the logistics cost. By grasping the electrode plate with the loading and unloading robot, position accuracy of placing the electrode plate in the electrolytic tank is improved, and an electrode distance error is reduced, which avoids occurrence of a short circuit between the electrode plates and improves a tank operation efficiency. Meanwhile, the electrolytic tank loading and unloading platform may be placed above the electrolytic tank for operation, which reduces a floor area of the electrolytic tank loading and unloading platform, a factory building height, and investment costs.

The electrolytic tank loading and unloading platform according to the embodiments of that present disclosure may also have at least one of the following additional technical features.

According to the embodiments of the present disclosure, the stripping device is disposed between the first loading and unloading opening and the second loading and unloading opening. The washing device includes a cathode washing device and a residual anode washing device. The cathode washing device is disposed at a side of the stripping device in a width direction of the bottom plate. The residual anode washing device is disposed at another side of the stripping device in the width direction of the bottom plate. Therefore, logistics costs for washing or stripping the electrode plate can be reduced, thereby improving operation efficiency of the electrode plate.

According to the embodiments of the present disclosure, the loading and unloading robot includes a first loading and unloading robot and a second loading and unloading robot. The first loading and unloading robot is disposed close to the first loading and unloading opening and adapted to grasp the electrode plate through the first loading and unloading opening. The second loading and unloading robot is disposed close to the second loading and unloading opening and adapted to grasp the electrode plate through the second loading and unloading opening. Therefore, it is beneficial to reduce loading and unloading logistics cost of the electrode plate, improving the tank operation efficiency.

According to the embodiments of the present disclosure, each of the first loading and unloading robot and the second loading and unloading robot independently includes at least one of a multi-axis robot and a three-coordinate robot. Therefore, it is possible to reduce the loading and unloading logistics costs of the electrode plate, improving the tank operation efficiency.

According to the embodiments of the present disclosure, the first loading and unloading opening and the second loading and unloading opening are in communication with each other. The washing device is disposed at a side of the loading and unloading opening in a width direction of the bottom plate. The stripping device is disposed at another side of the loading and unloading opening in the width direction of the bottom plate. Therefore, it is possible to reduce a logistics distance for loading and unloading of the electrode plate, improving the tank operation efficiency.

According to the embodiments of the present disclosure, when each of the first loading and unloading robot and the second loading and unloading robot includes the three-coordinate robot, the electrolytic tank loading and unloading platform further includes a moving track. The three-coordinate robot moves on the bottom plate through the moving track. Therefore, the tank operation efficiency can be improved.

According to the embodiments of the present disclosure, in a width direction of the bottom plate, a distance between a center line of the first loading and unloading opening and a center line of the bottom plate is h₁, where 0 ≤ h₁ ≤500 mm, and a distance between a center line of the second loading and unloading opening and the center line of the bottom plate is h₂, where 0 ≤ h₂ ≤ 500 mm. Therefore, loading and unloading efficiency of the electrode plate can be improved, thereby improving the tank operation efficiency.

According to the embodiments of the present disclosure, in the width direction of the bottom plate, the center line of the first loading and unloading opening coincides with the center line of the bottom plate, and the center line of the second loading and unloading opening coincides with the center line of the bottom plate. Therefore, the operation efficiency of the electrode plate can be improved.

According to the embodiments of the present disclosure, the electrolytic tank loading and unloading platform further includes a collection box disposed at the surface of the bottom plate facing away from the support frame. Therefore, it is convenient to hold the electrode plate and improve the tank operation efficiency.

Another aspect of the present disclosure provides an electrolytic loading and unloading integrated system. The electrolytic loading and unloading integrated system includes the electrolytic tank loading and unloading platform as described above and an electrolytic tank. Therefore, loading and unloading operations of a single electrode plate can be performed above the electrolytic tank, which reduces the logistics cost, improves the position accuracy of placing the electrode plate in the electrolytic tank, ensures the electrode distance, and reduces the short circuit. Moreover, operations may be performed without the need to cut off the power supply or reduce a current of the electrolytic tank, thus improving the tank operation efficiency. Meanwhile, since the operation of the electrode plate may be performed above the electrolytic tank, it is possible to reduce a factory building floor space, the factory building height, and the investment cost, and it is beneficial to realize the automation and intelligence of the workshop.

Additional aspects and advantages of the present disclosure will be in part set forth below, become apparent in part from the following description, or can be learned by practice of the present disclosure.

### BRIEF DESCRIPTION OF THE DRAWINGS

The above and/or additional aspects and advantages of the present disclosure will become apparent and understandable from the following description of embodiments taken in conjunction with the accompanying drawings, in which:
FIG. 1 shows a schematic structural diagram of an electrolytic tank loading and unloading platform according to a first embodiment of the present disclosure.
FIG. 2 shows a schematic structural diagram of an electrolytic tank loading and unloading platform according to a second embodiment of the present disclosure.
FIG. 3 shows a schematic structural diagram of an electrolytic tank loading and unloading platform according to a third embodiment of the present disclosure.

Reference numerals: electrolytic tank loading and unloading platform 10, bottom plate 100, loading and unloading opening 110, first loading and unloading opening 111, second loading and unloading opening 112, washing device 120, cathode washing device 121, residual anode washing device 122, stripping device 130, loading and unloading robot 140, first loading and unloading robot 141, second loading and unloading robot 142, first track 20, electrolytic tank 30, electrode plate 310, cathode plate 311, anode plate 312, third track 40.

### DETAILED DESCRIPTION

Embodiments of the present disclosure are described in detail below. The embodiments described below are exemplary, only used to explain the present disclosure, and should not be construed as limitation of the present disclosure.

In addition, terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality of" means at least two, such as two, three, etc., unless otherwise explicitly and specifically defined.

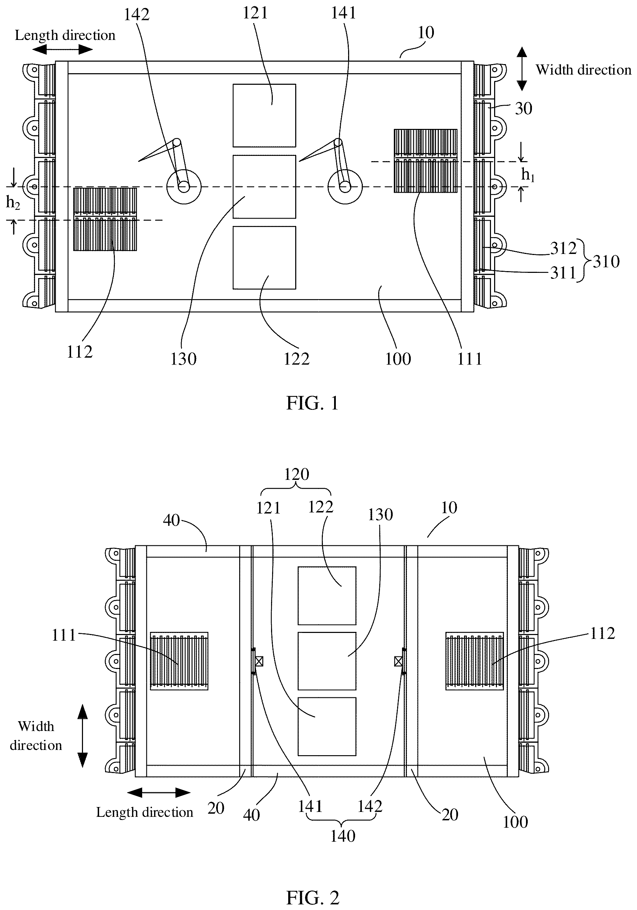

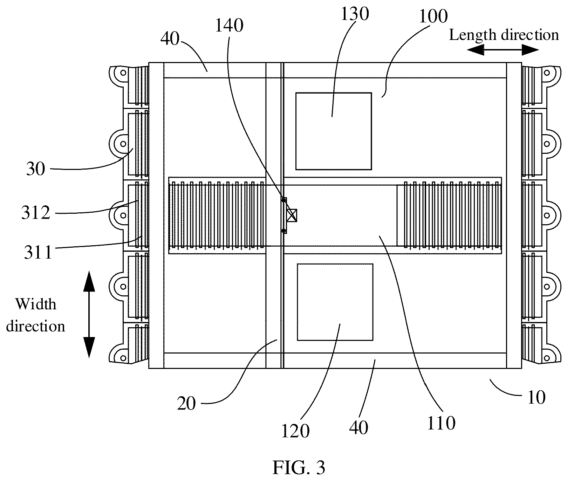

An electrolytic tank loading and unloading platform 10 according to embodiments of a first aspect of the present disclosure is described below with reference to the accompanying drawings. The electrolytic tank loading and unloading platform 10 according to the embodiments of the present disclosure is shown in FIG. 1 and FIG. 3. The electrolytic tank loading and unloading platform 10 includes a support frame (not labeled), a bottom plate 100, a washing device 120, a stripping device 130, and a loading and unloading robot 140.

It needs to be noted that the relative position between the loading and unloading platform 10 and an electrolytic tank 30 is not particularly limited. Hereinafter, taking the case where the bottom plate 100 is disposed above the electrolytic tank 30 as an example, the electrolytic tank loading and unloading platform 10 in the present disclosure is described.

The support frame is used for supporting the bottom plate 100, enabling the bottom plate 100 to span above the electrolytic tank 30. A mounting manner of the support frame is not particularly limited. According to a specific embodiment of the present disclosure, the support frame is movably disposed at an edge of the electrolytic tank 30, allowing the support frame to be movable in a length direction of the electrolytic tank 30.

It needs to be noted that the electrolytic tank 30 is a place where an electrochemical reaction or electrolysis occurs, and consists of two conductive electrodes (an anode and a cathode) which are connected by a circuit. As shown in FIG. 1 and FIG. 3, during metal purification, there may be a plurality of electrolytic tanks 30 arranged at intervals in a transverse direction, and a channel can be connected between two adjacent electrolytic tanks 30. The electrolytic tank 30 is provided with a plurality of electrode plates 310 including a plurality of cathode plates 311 and a plurality of anode plates 312. Each of the plurality of cathode plates 311 is removably disposed in the electrolytic tank 30. The cathode plate 311 has a usable state and a replacement state. Each of the plurality of anode plates 312 is removably disposed in the electrolytic tank 30. The anode plate 312 has a usable state and a replacement state. That is, the plurality of cathode plates 311 may be removed and placed individually. In the usable state, the cathode plate 311 may be putted into the electrolytic tank 30 for operation; and in the replacement state, the cathode plate 311 needs to be removed and replaced with the cathode plate 311 in the usable state. Similarly, the plurality of anode plates 312 may be removed and placed individually. In the usable state, the anode plate 312 may be putted into the electrolytic tank 30 for operation; and in the replacement state, the anode plate 312 needs to be removed and replaced with the anode plate 312 in the usable state. Of course, the cathode plate 311 and the anode plate 312 may also be removed and placed in multiple pieces respectively.

The replacement states of the cathode plate 311 and the anode plate 312 include, but are not limited to, situations where the cathode plate 311 and the anode plate 312 undergo bending and deformation, or the cathode plate 311 can no longer deposit metal, and the like.

The bottom plate 100 is disposed on the support frame and may span across the plurality of electrolytic tanks 30. When the support frame moves in the length direction or a width direction of the electrolytic tank 30, the bottom plate 100 also moves accordingly. The bottom plate 100 has a loading and unloading opening 110 penetrating the bottom plate 100. The electrode plate 310 in the electrolytic tank 30 may be removed and placed through the loading and unloading opening 110. The loading and unloading opening 110 includes a first loading and unloading opening 111 and a second loading and unloading opening 112. The first loading and unloading opening 111 and the second loading and unloading opening 112 are formed at two ends of the bottom plate 100 in a length direction of the bottom plate 100. By providing the two loading and unloading openings 110, the electrode plates 310 in different electrolytic tanks 30 may be removed and placed simultaneously, improving a tank operation efficiency.

The washing device 120 is used for washing the electrode plate 310. The washing device 120 is disposed at a surface of the bottom plate 100 facing away from the support frame and located between the first loading and unloading opening 111 and the second loading and unloading opening 112. After the electrode plate 310 is removed from the first loading and unloading opening 111 or the second loading and unloading opening 112, it is necessary to wash impurities on the electrode plate 310, and then perform other operations. The washing device 120 is disposed between the first loading and unloading opening 111 and the second loading and unloading opening 112 to reduce a moving distance of the electrode plate 310 and facilitate the washing of the electrode plate 310, thereby reducing logistics costs and improving operation efficiency.

The stripping device 130 is used for stripping pure metal deposited on the cathode plate 311. It needs to be noted that during the metal purification, by taking the purification of copper metal as an example, copper on the anode plate 312 is electrolyzed into an electrolyte to become Cu2+ by using an oxidation-reduction principle. The Cu2+ with positive charges flows to the cathode plate 311, is enriched on the cathode plate 311, becomes metallic copper, and is adsorbed on the cathode plate 311. Therefore, the metallic copper on the cathode plate 311 needs to be stripped off for collection. The stripping device 130 is disposed at the surface of the bottom plate 100 facing away from the support frame and located between the first loading and unloading opening 111 and the second loading and unloading opening 112, to reduce a moving distance of the cathode plate 311, facilitating stripping of the metal on the cathode plate 311, reducing the logistics cost, and improving the operation efficiency.

The loading and unloading robot 140 is used for removing a single electrode plate 310 from the electrolytic tank 30 and placing the electrode plate 310 in the corresponding washing device 120 or stripping device 130 for processing. Moreover, the loading and unloading robot 140 puts the processed electrode plate 310 still in the usable state back into the electrolytic tank 30, transports the processed electrode plate 310 in the replacement state to a storage device, and removes the electrode plate 310 in the usable state from the storage device to be mounted into the electrolytic tank 30.

According to some embodiments of the present disclosure, the electrolytic tank loading and unloading platform 10 further includes a collection box (not labeled). The collection box is disposed at the surface of the bottom plate 100 facing away from the support frame. Specifically, the collection box may be disposed in a remaining region of the bottom plate 100 without providing the loading and unloading opening 110, the washing device 120, the stripping device 130, and the loading and unloading robot 140. The collection box may be used for collecting the processed electrode plate 310 in the replacement state while receiving the electrode plate 310 in the usable state, improving operation efficiency of the electrode plate 310. It needs to be noted that the collection box may also be used for collecting residual anode or metal stripped from the cathode.

With the electrolytic tank loading and unloading platform 10 according to the present disclosure, loading and unloading operations of the single electrode plate 310 (the cathode plate 311 and/or the anode plate 312) may be performed with continuous power supply, to realize intelligent and unmanned electrolytic production, reducing the logistics cost. By grasping the electrode plate by the loading and unloading robot 140, position accuracy of placing the electrode plate 310 in the electrolytic tank 30 is improved, and an electrode distance error is reduced, which avoids occurrence of a short circuit between the electrode plates and improves the tank operation efficiency. Meanwhile, the electrolytic tank loading and unloading platform 10 may be placed above the electrolytic tank 30 for operation, which reduces a floor area of the electrolytic tank loading and unloading platform 10, a factory building height, and investment costs.

According to some embodiments of the present disclosure, as shown in FIG. 1 and FIG. 2, the stripping device 130 may be disposed between the first loading and unloading opening 111 and the second loading and unloading opening 112. The washing device 120 may include a cathode washing device 121 and a residual anode washing device 122. The cathode washing device 121 is disposed at a side of the stripping device 130 in a width direction of the bottom plate 100. The residual anode washing device 122 is disposed at another side of the stripping device 130 in the width direction of the bottom plate 100. Specifically, the washing device 120 and the stripping device 130 may be placed at a middle position between the first loading and unloading opening 111 and the second loading and unloading opening 112, i.e., a distance from each of the washing device 120 and the stripping device 130 to the first loading and unloading opening 111 is the same as its distance to the second loading and unloading opening 112. It can be seen from the metal purification principle described above that the electrode plate 310 includes the cathode plate 311 and the anode plate 312. A reduction reaction is performed on the cathode plate 311, and an oxidation reaction is performed on the anode plate 312. When the anode plate 312 or the cathode plate 311 is removed from the electrolytic tank 30 for washing, the cathode plate 311 and the anode plate 312 may be placed in their respective washing devices 120 for washing due to different washing standards, i.e., the anode plate 312 is placed in the residual anode washing device 122 for washing, and the cathode plate 311 is placed in the cathode washing device 121 for washing, improving a washing quality. In addition to washing the cathode plate 311, it is also necessary to strip off a metal element deposited on the cathode plate 311, and the stripping device 130 is disposed between the cathode washing device 121 and the residual anode washing device 122, to facilitate the washing of the anode plate 312 and the washing and stripping of the cathode plate 311, thereby improving the operation efficiency of the electrode plate 310.

According to some embodiments of the present disclosure, as shown in FIG. 1 and FIG. 2, the loading and unloading robot 140 includes a first loading and unloading robot 141 and a second loading and unloading robot 142. The first loading and unloading robot 141 is disposed close to the first loading and unloading opening 111 and adapted to grasp the electrode plate through the first loading and unloading opening 111. The second loading and unloading robot 142 is disposed close to the second loading and unloading opening 112 and adapted to grasp the electrode plate through the second loading and unloading opening 112. Specifically, when the washing device 120 and the stripping device 130 are placed at the middle position between the first loading and unloading opening 111 and the second loading and unloading opening 112, the first loading and unloading robot 141 is placed among the first loading and unloading opening 111, the washing device 120, and the stripping device 130, and the second loading and unloading robot 142 is disposed among the second loading and unloading opening 112, the washing device 120, and the stripping device 130. The first loading and unloading robot 141 is disposed close to the first loading and unloading opening 111, facilitating the first loading and unloading robot 141 to grasp the electrode plate 310 in the electrolytic tank 30 through the first loading and unloading opening 111 to perform related operations. The second loading and unloading robot 142 is disposed close to the second loading and unloading opening 112, facilitating the second loading and unloading robot 142 to grasp the electrode plate 310 in the electrolytic tank 30 through the second loading and unloading opening 112 to perform related operations. Therefore, by providing the two loading and unloading robots 140, the electrodes plates 310 in the electrolytic tank 30 can be grasped concurrently, to improve the operation efficiency of the electrode plate 310.

According to some embodiments of the present disclosure, each of the first loading and unloading robot 141 and the second loading and unloading robot 142 independently includes at least one of a multi-axis robot and a three-coordinate robot. Specifically, the first loading and unloading robot 141 and the second loading and unloading robot 142 may both be set as the three-coordinate robot or the multi-axis robot. Alternatively, one of the first loading and unloading robot 141 and the second loading and unloading robot 142 may be set as the three-coordinate robot, and the other one of the first loading and unloading robot 141 and the second loading and unloading robot 142 may be set as the multi-axis robot. Those skilled in the art may set the first loading and unloading robot 141 and the second loading and unloading robot 142 as their own needs. Therefore, the operation efficiency of the electrode plate 310 can be improved, thus improving the tank operation efficiency.

It needs to be noted that the three-coordinate robot is composed of three linear joints which are used to determine a position of an end effector, and typically also has a rotation joint used for determining a posture of the end effector. Specifically, in a specific embodiment of the present disclosure, as shown in FIG. 1, the three-coordinate robot is fixed on the bottom plate 100. The three linear joints of the robot may control the three-coordinate robot to perform a linear movement in X, Y, and Z axes, and the rotation joint may control the three-coordinate robot to rotate, facilitating the robot to grasp the electrode plate 310 through the loading and unloading opening 110, ensuring an electrode distance between the anode plate 312 and the cathode plate 311, reducing the short circuit, and improving the tank operation efficiency.

The multi-axis robot is a robot system constructed by taking an XYZ rectangular coordinate system as a basic mathematical model, taking a single-axis mechanical arm driven by a servo motor or a stepper motor as a basic operation unit, and taking a ball screw, a synchronous belt, a gear and a rack as common transmission manners, and may reach any point in the XYZ three-dimensional coordinate system and follow a controllable motion trajectory. In a specific embodiment of the present disclosure, as shown in FIG. 2, when each of the first loading and unloading robot 141 and the second loading and unloading robot 142 includes the multi-axis robot, the electrolytic tank loading and unloading platform 10 further includes a moving track. The multi-axis robot moves on the bottom plate 100 through the moving track. The moving track may include two first tracks 20 spaced apart from each other in the length direction of the bottom plate 100. The first track 20 extends in the width direction of the bottom plate 100, and the multi-axis robot moves in a Y direction through the first track 20. The moving track may further include a second track (not marked). Two second tracks are connected to the first tracks 20, respectively. An extending direction of the second track is perpendicular to the width direction of the bottom plate 100. Two multi-axis robots are respectively disposed on the two second tracks and move in a Z direction through the second tracks. The moving track may further include third tracks 40 arranged at intervals in the width direction of the bottom plate 100 and extending in the length direction of the bottom plate 100. Two ends of the first track 20 in the extending direction of the first track 20 are connected to two third tracks 40, respectively. The multi-axis robot moves in an X direction through the third track 40. It needs to be noted that the X direction here may be the length direction of the bottom plate 100, and the Y direction here may be the width direction of the bottom plate 100. As a result, the multi-axis robot is movable on the bottom plate 100, facilitating the multi-axis robot to grasp the electrode plate 310 through the loading and unloading opening 110, ensuring the electrode distance between the anode plate 312 and the cathode plate 311, avoiding the occurrence of the short circuit between the electrode plates 310, and improving the operation efficiency of the electrode plate 310.

According to some embodiments of the present disclosure, as shown in FIG. 3, the first loading and unloading opening 111 and the second loading and unloading opening 112 are in communication with each other. The washing device 120 is disposed at a side of the loading and unloading opening 110 in a width direction of the bottom plate 100, and the stripping device 130 is disposed at another side of the loading and unloading opening 110 in the width direction of the bottom plate 100. The first loading and unloading opening 111 is in communication with the second loading and unloading opening 112 to form a large loading and unloading opening 110, which facilitates the removal and placement of the electrode plate 310. The washing device 120 and the stripping device 130 are disposed at two sides of the loading and unloading opening 110 in the width direction of the bottom plate 100, respectively. In this way, it is beneficial to the washing or stripping of the electrode plate 310, improving the operation efficiency of the electrode plate 310.

According to some embodiments of the present disclosure, as shown in FIG. 1, in the width direction of the bottom plate 100, a distance between a center line of the first loading and unloading opening 111 and a center line of the bottom plate 100 is h₁, where 0 ≤ h₁ ≤ 500 mm, and a distance between a center line of the second loading and unloading opening 112 and the center line of the bottom plate 100 is h₂, where 0 ≤ h₂ ≤ 500 mm. For example, h₁ may be 50 mm, 100 mm, 150 mm, 200 mm, 250 mm, 300 mm, 350 mm, or 450 mm. For example, h₂ may be 50 mm, 100 mm, 150 mm, 200 mm, 250 mm, 300 mm, 350 mm, or 450 mm. Specifically, h₁ may be the same as or different from h₂. By limiting h₁ and h₂ within the above range, it is possible to ensure that the first loading and unloading opening 111 and the second loading and unloading opening 112 are located in the vicinity of the center line of the bottom plate 10 in the width direction of the bottom plate 100. Therefore, it is beneficial to the removal and placement of the electrode plate 310, reduce the moving distance of the electrode plate 310, and improve the operation efficiency of the electrode plate 310.

According to some embodiments of the present disclosure, in the width direction of the bottom plate 100, the center line of the first loading and unloading opening 111 coincides with the center line of the bottom plate 100, and the center line of the second loading and unloading opening 112 coincides with the center line of the bottom plate 100. Specifically, referring to FIG. 2, in the length direction of the bottom plate 100, when the first loading and unloading opening 111 is not in communication with the second loading and unloading opening 112, the washing device 120 and the stripping device 130 may be placed at the middle position between the first loading and unloading opening 111 and the second loading and unloading opening 112, and a center line of the stripping device 130 in the width direction of the bottom plate 100 may also coincides with the center line of the bottom plate 100. The cathode washing device 121 is disposed at a side of the stripping device 130 in the width direction of the bottom plate 100, and the residual anode washing device 122 is disposed at the other side of the stripping device 130 in the width direction of the bottom plate 100. Moreover, the cathode washing device 121 and the residual anode washing device 122 are symmetrically distributed at the two sides of the stripping device 130. When the first loading and unloading opening 111 is in communication with the second loading and unloading opening 112 in the length direction of the bottom plate 100, the stripping device 130 and the washing device 120 are disposed at the two sides of the loading and unloading opening 110 in the width direction of the bottom plate 100 and are symmetrically distributed. Therefore, it is convenient for the loading and unloading robot 140 to grasp the electrode plate 310 through the loading and unloading opening, further improving the operation efficiency of the electrode plate 310.

According to some embodiments of the present disclosure, a size of the loading and unloading opening 110 is not particularly limited. In a specific embodiment of the present disclosure, when the width direction of the loading and unloading opening 110 is the same as the width direction of the electrolytic tank 30, in order to ensure that the electrode plate 310 smoothly passes through the loading and unloading opening 110, a width of the loading and unloading opening 110 may be greater than a length of a cathode conductive rod and a length of an anode hanger. When a length direction of the loading and unloading opening 110 is the same as the length direction of the electrolytic tank 30, a length of the loading and unloading opening 110 may be greater than a size of the thickest electrode plate 310 among the cathode plate and the anode plate. Therefore, the removal and placement of the electrode plate 310 are facilitated.

According to some embodiments of the present disclosure, a distance between a lower surface of the bottom plate 100 and an upper surface of the electrolytic tank 30 is not particularly limited. In a specific embodiment of the present disclosure, a distance between the lower surface of the bottom plate 100 and the upper surface of the electrolytic tank 30 in an up-down direction may range from 0 mm to 1500 mm. For example, the distance may be 100 mm, 300 mm, 500 mm, 700 mm, 900 mm, 1100 mm, or 1300 mm. In this way, the factory building height can be reduced while ensuring a smooth movement of the bottom plate 100, reducing the investment cost.

An electrolytic loading and unloading integrated system is provided according to an embodiment of a second aspect of the present disclosure. The electrolytic loading and unloading integrated system includes the electrolytic tank loading and unloading platform 10 as described above and an electrolytic tank 30. Therefore, the loading and unloading operations of the single electrode plate 310 (the cathode plate 311 and/or the anode plate 312) can be performed with the continuous power supply, to realize the intelligent and unmanned electrolytic production, reducing the logistics cost. By grasping the electrode plate 310 with the loading and unloading robot 140, the position accuracy of placing the electrode plate 310 in the electrolytic tank 30 is improved, and the electrode distance error is reduced, which avoids the occurrence of the short circuit between the electrode plates and improves the tank operation efficiency. Meanwhile, the electrolytic tank loading and unloading platform 10 may be placed above the electrolytic tank 30 for operation, which reduces the floor area of the electrolytic tank loading and unloading platform 10, the factory building height, and the investment cost.

For embodiments where specific techniques or conditions are not specified, the embodiments are performed according to the techniques or conditions described in the literature of this field or according to the product specification. Reagents or instruments not specifying manufacturers are all commercially available conventional products.

In descriptions of the present disclosure, descriptions with reference to the terms "an embodiment", "some embodiments", "examples", "specific examples", or "some examples" etc., mean that specific features, structures, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

Although the embodiments of the present disclosure have been shown and described above, it can be understood that the above-mentioned embodiments are exemplary and should not be construed as limiting the present disclosure. For those of ordinary skill in the art, changes, modifications, replacements, and variations can be made to the above-mentioned embodiments within the scope of the present disclosure.

## Claims

1. An electrolytic tank loading and unloading platform, comprising:
a support frame;
a bottom plate disposed on the support frame, the bottom plate having a loading and unloading opening penetrating the bottom plate, the loading and unloading opening comprising a first loading and unloading opening and a second loading and unloading opening, and the first loading and unloading opening and the second loading and unloading opening being formed at two ends of the bottom plate in a length direction of the bottom plate;
a washing device disposed at a surface of the bottom plate facing away from the support frame and located between the first loading and unloading opening and the second loading and unloading opening;
a stripping device disposed at the surface of the bottom plate facing away from the support frame and located between the first loading and unloading opening and the second loading and unloading opening; and
a loading and unloading robot disposed at the surface of the bottom plate facing away from the support frame and adapted to grasp an electrode plate through the first loading and unloading opening and the second loading and unloading opening.

2. The electrolytic tank loading and unloading platform according to claim 1, wherein:
the stripping device is disposed between the first loading and unloading opening and the second loading and unloading opening; and
the washing device comprises:
a cathode washing device disposed at a side of the stripping device in a width direction of the bottom plate; and
a residual anode washing device disposed at another side of the stripping device in the width direction of the bottom plate.

3. The electrolytic tank loading and unloading platform according to claim 2, wherein the loading and unloading robot comprises:
a first loading and unloading robot disposed close to the first loading and unloading opening and adapted to grasp the electrode plate through the first loading and unloading opening; and
a second loading and unloading robot disposed close to the second loading and unloading opening and adapted to grasp the electrode plate through the second loading and unloading opening.

4. The electrolytic tank loading and unloading platform according to claim 3, wherein each of the first loading and unloading robot and the second loading and unloading robot independently comprises at least one of a multi-axis robot and a three-coordinate robot.

5. The electrolytic tank loading and unloading platform according to claim 1, wherein:
the first loading and unloading opening and the second loading and unloading opening are in communication with each other;
the washing device is disposed at a side of the loading and unloading opening in a width direction of the bottom plate; and
the stripping device is disposed at another side of the loading and unloading opening in the width direction of the bottom plate.

6. The electrolytic tank loading and unloading platform according to claim 4, wherein each of the first loading and unloading robot and the second loading and unloading robot comprises the multi-axis robot, the electrolytic tank loading and unloading platform further comprising:
a moving track, the multi-axis robot moving on the bottom plate through the moving track.

7. The electrolytic tank loading and unloading platform according to claim 1, wherein in a width direction of the bottom plate, a distance between a center line of the first loading and unloading opening and a center line of the bottom plate is h₁, where 0 ≤ h₁ ≤500 mm, and a distance between a center line of the second loading and unloading opening and the center line of the bottom plate is h₂, where 0 ≤ h₂ ≤ 500 mm.

8. The electrolytic tank loading and unloading platform according to claim 7, wherein in the width direction of the bottom plate, the center line of the first loading and unloading opening coincides with the center line of the bottom plate, and the center line of the second loading and unloading opening coincides with the center line of the bottom plate.

9. The electrolytic tank loading and unloading platform according to claim 1, further comprising:
a collection box disposed at the surface of the bottom plate facing away from the support frame.

10. An electrolytic loading and unloading integrated system, comprising:
the electrolytic tank loading and unloading platform according to any one of claims 1 to 9; and
an electrolytic tank.
